# EUROPEAN PATENT SPECIFICATION

(11) **EP 3 037 330 B1**
(45) Date of publication and mention of the grant of the patent: **30.06.2021**
(21) Application number: 15200007.1
(22) Date of filing: 15.12.2015
(51) Int. Cl.: B62H 1/02, B62H 1/06

(54) **KICKSTAND WITH ADJUSTABLE LENGTH**
KIPPSTÄNDER MIT ANPASSBARER LÄNGE
BÉQUILLE RÉGLABLE EN LONGUEUR

(30) Priority: 23.12.2014 IT PD20140357
(43) Date of publication of application: 29.06.2016
(73) Proprietor: Ursus S.P.A., 36027 Rosa' VI (IT)
(72) Inventor: FERRONATO, Sergio, 36027 ROSA' VI (IT)
(74) Representative: Modiano, Micaela Nadia

(56) References cited:
- CN-Y- 2 186 195
- DE-U1- 8 225 833
- FR-A1- 2 928 617
- US-A- 3 712 640
- US-A1- 2006 231 512
- None

## Description

The present invention relates to a kickstand with adjustable length.

Nowadays telescopic kickstands are known which are constituted by a bracket for fixing to the lower part of a frame of a bicycle, of the type of a city bike, mountain bike, and the like, the bracket being articulated to a telescopic leg with a foot for resting on the ground.

The leg is constituted by a rod-like element, which is pivoted to the bracket, and a tubular element, which is provided with the resting foot, with the rod-like element partially inserted in the tubular element and extractable therefrom and insertable in order to extend or retract, selectively, the telescopic leg.

Such a telescopic kickstand has reversible means for locking the position of the tubular element with respect to the rod-like element.

Such locking means are usually constituted by a screw which is arranged so as to pass through the wall of the tubular element at a certain point, in order to be screwed to the underlying rod-like element so as to stabilize the mutual position of the two telescopic elements.

Such telescopic kickstands, although appreciated and widespread, show some area for improvement.

In particular, adjustment of the length requires the use of special tools, such as a screwdriver, a spanner or an Allen key, depending on the head of the locking screw, which must be used for a relatively long period in order to unscrew the screw when the user wants to perform a new adjustment of the length of the leg, and subsequently screw the same screw back in once the new length of the leg is established, operations which are usually performed by requiring the user to adopt a very uncomfortable position, crouched on the ground or bent double.

Moreover such locking system based on the adoption of a screw may not always be effective, owing to the constant stresses to which the kickstand is subjected in the current use of the bicycle, which can determine a loosening of the screw, and a consequent risk of functional failure of the kickstand in use, since this can suddenly shorten owing to the weight of the bicycle with consequent overturning thereof and with all the dangers that such an event can involve.

DE 82 25 833 U1 discloses a kickstand with adjustable length, with a support bar on which a leg tube is slidably mounted and can be fixed in various positions. The support bar carries a spring-biased locking piece that is pushed into a selected hole of a series of holes provided on the leg tube. The locking piece is disengaged by means of a sufficiently narrow tool pushed through the locking hole. FR 2928617 A1 discloses a kickstand according to the preamble of claim 1.

The aim of the present invention is to provide a kickstand with adjustable length which is capable of overcoming the above mentioned drawbacks of conventional kickstands.

Within this aim, an object of the invention is to provide a kickstand with adjustable length which is simpler and quicker to adjust than conventional kickstands.

Another object of the invention is to provide a kickstand the length adjustment of which is stable and safe.

A further object of the invention is to provide a kickstand with adjustable length, the length of which is adjustable in an intuitive manner without particular advance training.

In accordance with the invention, there is provided a kickstand with adjustable length as defined in the appended claims.

Further characteristics and advantages of the invention will become better apparent from the description of a preferred, but not exclusive, embodiment of the kickstand according to the invention, which is illustrated by way of non-limiting example in the accompanying drawings wherein:

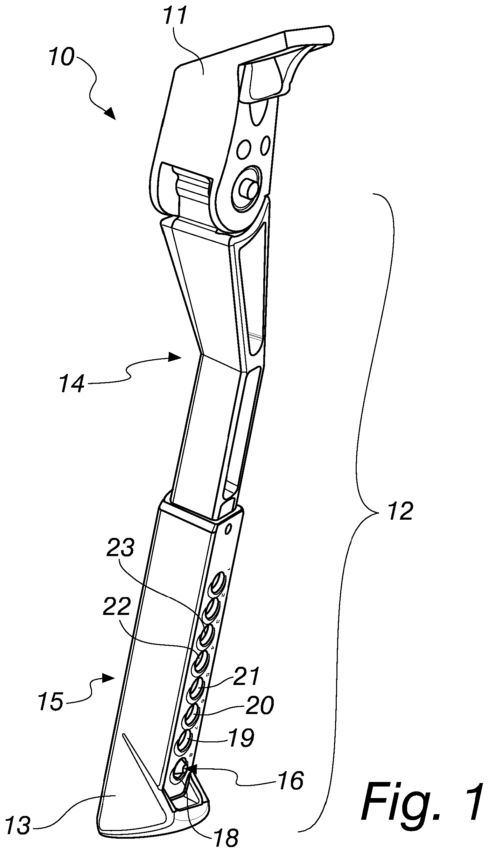

- Figure 1 is an exploded perspective view of a kickstand according to the invention;
- Figure 2 is a cross-sectional side view of the kickstand according to the invention;

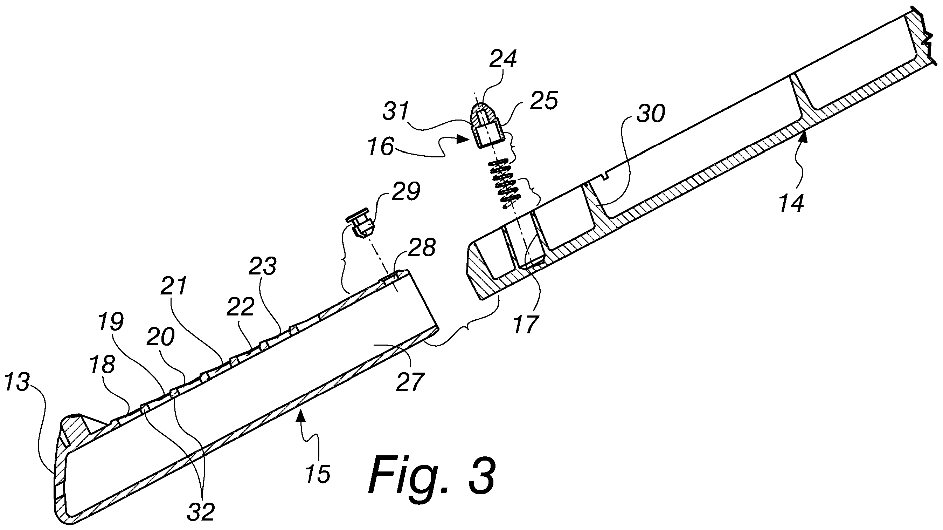

- Figure 3 is an exploded version of the cross-sectional side view in Figure 2.

With reference to the figures, a kickstand with adjustable length according to the invention is generally designated with the reference numeral 10.

The kickstand with adjustable length 10 is of the type that comprises a fixing bracket 11 to which a telescopic leg 12 with a resting foot 13 is articulated; the telescopic leg 12 comprises a first element 14 articulated to the bracket 11, and a second element 15, which can be extracted telescopically with respect to the first element 14 and is provided with the resting foot 13.

Reversible means are provided for locking the position of the second element 15 with respect to the first element 14.

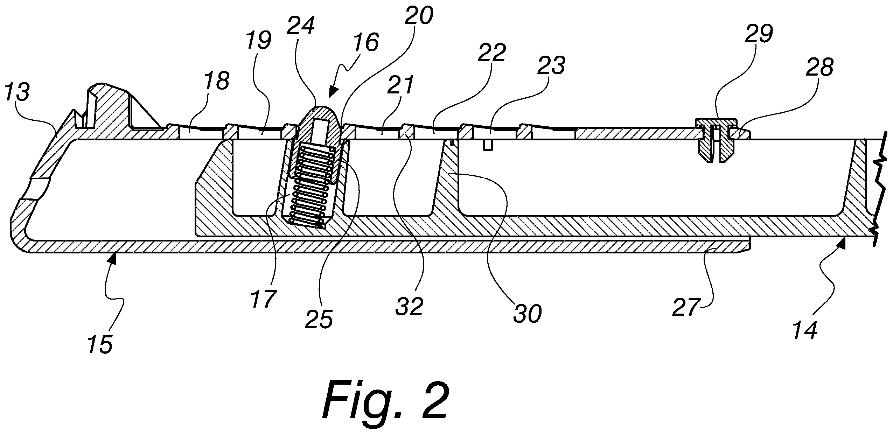

The peculiarity of the kickstand with adjustable length 10 according to the invention consists in that the reversible locking means comprise:
- a button 16, which is accommodated in a corresponding seat 17 defined in the inner element of the first element 14 and the second element 15, which in the present embodiment is constituted by the first element 14; the seat 17 is open toward the outer element, i.e. toward the second element 15, with elastic means for pushing the button 16 toward the outside of the seat 17;
- a series of through holes 18, 19, 20, 21, 22, 23 which are defined on the second element 15 and are shaped to be crossed by a protruding end 24 of the button 16 in a mutual locking configuration between the first element 14 and the second element 15, as in Figure 2.

The seat 17 has such a depth as to allow the full disengagement of the button 16 from each one of the through holes 18, 19, 20, 21, 22, 23.

The button 16 comprises a sliding portion 25, which is shaped in order to allow the translation of the button inside the seat 17.

In the present embodiment, as mentioned above, the first element 14 is arranged inside the second element 15.

In a variation of embodiment, not shown for the sake of simplicity, it is the second element 15 that slides telescopically inside the first element 14, the latter therefore being tubular.

The button 16, which comprises the protruding end 24 and the sliding portion 25, is provided in a single piece, for example made of plastic material.

Alternatively, such button can be made of metallic material or of a metallic alloy.

The protruding end 24 has a smaller transverse size than the sliding portion 25, in this manner an anti-extraction abutment shoulder 31 is defined between the two parts, and is designed to abut against the inner edges 32 of the through holes for locking.

The protruding end 24 is preferably frustum-shaped with a rounded tip, so that it can be handled with one or two fingers of a hand without danger of cutting; furthermore, thanks to this peculiarity the button 16 is substantially self-centering in its movement to exit from the seat 17 in order to be engaged in a previously-chosen through hole of the various locking holes 18, 19, 20, 21, 22 and 23.

The elastic pusher means, inside the seat 17, are constituted by a helical spring.

Alternatively, such elastic pusher means can be other elastic bodies, such as a rubber plug or other, similar element.

The second element 15 is therefore tubular, and shaped complementarily with respect to the cross-section of the rod-like first element 14, in order to allow the mutual sliding.

At the opposite end 27 with respect to the foot 13, the second element 15 has a through hole 28, on the side of the row of through holes for locking, 18, 19, 20, 21, 22, 23, for inserting an extraction-preventing insert 29, which is adapted to prevent the first element 14 and the second element 15 from mutually separating via the one sliding out of the other.

The extraction-preventing insert 29 is intended for stroke-limiting abutment against an abutment wall 30 defined on the first element 14.

In practice it has been found that the invention fully achieves the intended aim and objects.

In particular, with the invention a kickstand with adjustable length has been devised which is simpler and quicker to adjust in length with respect to the known art, it being necessary and sufficient for a user to act on the button by pushing it into its seat, repositioning the two elements, first and second, so as to define a new length of the leg, and then releasing the button so that the pop-out of that button stabilizes the new relative position between the first element and the second element.

Furthermore, with the invention a kickstand has been devised, the length adjustment of which is stable and secure, since no matter how many vibrations the leg may be subjected to, the button is stably kept in the locking configuration by the thrust of the elastic element arranged in the seat of the button proper.

Moreover, with the invention a kickstand has been devised the length of which is adjustable intuitively without special tools or advance training.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A kickstand with adjustable length (10), of the type that comprises a fixing bracket (11) to which a telescopic leg (12) with a resting foot (13) is articulated, said telescopic leg (12) comprising a first element (14) articulated to said bracket (11) and a second element (15), which can be extracted telescopically with respect to said first element (14) and is provided with said resting foot (13), reversible means being provided for locking the position of the second element (15) with respect to the first element (14), said reversible locking means comprising:
- a button (16), which is accommodated in a corresponding seat (17) defined in the inner element of said first element (14) and said second element (15) and open toward the outer element of said first element (14) and second element (15), with elastic means for pushing the button (16) toward the outside of said seat (17),
- a series of through holes (18, 19, 20, 21, 22, 23) which are defined on the outer element of said first element (14) or second element (15) and are shaped to be crossed by a protruding end (24) of said button (16), said protruding end (24) of said button (16) protruding outside one of said through holes (18, 19, 20, 21, 22, 23) in a mutual locking configuration between said first and second elements,
said seat (17) having such a depth as to allow the full disengagement of said button (16) from each one of said through holes (18, 19, 20, 21, 22, 23), said button (16) comprising a sliding portion (25), which is shaped in order to allow the translation of the button inside said seat (17),
**characterized in that** at the opposite end (27) with respect to the foot (13), the second element (15) has a through hole (28), on the side of the row of through locking holes (18, 19, 20, 21, 22, 23), for the insertion of an extraction-preventing insert (29), adapted to prevent the first element (14) and the second element (15) from mutually separating via the one sliding out of the other, said extraction-preventing insert (29) being intended for stroke-limiting abutment against an abutment wall (30) defined on the first element (14).

2. The kickstand with adjustable length (10) according to claim 1, **characterized in that** said first element (14) is arranged inside said second element (15).

3. The kickstand with adjustable length according to one or more of the preceding claims, **characterized in that** said button (16), which comprises said protruding end (24) and said sliding portion (25), is provided in a single piece.

4. The kickstand with adjustable length according to one or more of the preceding claims, **characterized in that** said button (16) is constituted by a single piece made of plastic material or other similar and equivalent material.

5. The kickstand with adjustable length according to one or more of the preceding claims, **characterized in that** said elastic pusher means, inside the seat (17), are constituted by a helical spring.

## Patentansprüche

1. Ein Kippständer mit anpassbarer Länge (10) von der Art, die einen Befestigungsarm (11) umfasst, an welchem ein Teleskopbein (12) mit Ständerfuß (13) gelenkig angebracht ist, wobei das Teleskopbein (12) ein erstes Element (14) umfasst, das gelenkig mit dem Arm (11) verbunden ist, und ein zweites Element (15), welches teleskopisch gegenüber dem ersten Element (14) ausgezogen werden kann und mit dem Ständerfuß (13) ausgestattet ist; wobei reversible Mittel bereitgestellt sind, um die Position des zweiten Elements (15) mit Bezug auf das erste Element (14) zu arretieren; wobei die reversiblen Arretiermittel Folgendes umfassen:
- einen Knopf (16), der in einem dazugehörigen Sitz (17) untergebracht ist, bestimmt im inneren Element des ersten Elements (14) und des zweiten Elements (15) und offen zum äußeren Element des ersten Elements (14) und des zweiten Elements (15) hin, mit elastischen Mitteln zum Drücken des Knopfs (16) zur Außenseite des Sitzes (17) hin,
- eine Reihe von Durchgangslöchern (18, 19, 20, 21, 22, 23), die im äußeren Element des ersten (14) oder des zweiten Elements (15) bestimmt und geformt sind, um von einem vorstehenden Ende (24) des Knopfs (16) durchquert zu werden, wobei das vorstehende Ende (24) des Knopfs (16) in einer Arretierkonfiguration zwischen dem ersten und dem zweiten Element aus einem der Durchgangslöcher (18, 19, 20, 21, 22, 23) herausragt,
wobei der Sitz (17) eine Tiefe hat, um die vollständige Trennung des Knopfs (16) von jedem der Durchgangslöcher (18, 19, 20, 21, 22, 23) zu ermöglichen, wobei der Knopf (16) einen gleitenden Abschnitt (25) umfasst, der geformt ist, um die Translationsbewegung des Knopfs innerhalb des Sitzes (17) zu gestatten,
**dadurch gekennzeichnet, dass** das zweite Element (15) an dem dem Fuß (13) gegenüberliegenden Ende (27) ein Durchgangsloch (28) auf der Seite der Reihe von Arretier-Durchgangslöchern (18, 19, 20, 21, 22, 23) zum Einführen eines die Extraktion verhindernden Einsatzes (29) hat, ausgebildet, um zu verhindern, dass das erste Element (14) und das zweite Element (15) sich voneinander trennen, indem das eine aus dem anderen herausrutscht; wobei der die Extraktion verhindernde Einsatz (29) für hubbegrenzendes Anstoßen an eine Widerlagerwand (30) bestimmt ist, die am ersten Element (14) bestimmt ist.

2. Der Kippständer mit anpassbarer Länge (10) gemäß Anspruch 1, **dadurch gekennzeichnet, dass** das erste Element (14) innerhalb des zweiten Elements (15) angeordnet ist.

3. Der Kippständer mit anpassbarer Länge gemäß einem oder mehreren der obigen Ansprüche, **dadurch gekennzeichnet, dass** der Knopf (16), der das vorstehende Ende (24) und den gleitenden Abschnitt (25) umfasst, einteilig hergestellt ist.

4. Der Kippständer mit anpassbarer Länge gemäß einem oder mehreren der obigen Ansprüche, **dadurch gekennzeichnet, dass** der Knopf (16) aus einem einzigen Stück aus Kunststoffmaterial oder anderem ähnlichen und gleichwertigen Material besteht.

5. Der Kippständer mit anpassbarer Länge gemäß einem oder mehreren der obigen Ansprüche, **dadurch gekennzeichnet, dass** die elastischen Druckmittel innerhalb des Sitzes (17) aus einer Schraubenfeder bestehen.

## Revendications

1. Béquille réglable en longueur (10), du type qui comprend un support de fixation (11) sur lequel une patte télescopique (12) avec un pied de repos (13) est articulé, ladite patte télescopique (12) comprenant un premier élément (14) articulé sur ledit support (11) et un second élément (15), qui peut être extrait téléscopiquement relativement audit premier élément (14) et est pourvu dudit pied de repos (13), des moyens réversibles étant fournis pour bloquer la position du second élément (15) par rapport au premier élément (14), lesdits moyens de blocages réversibles comprenant :
un picot (16), qui est logé dans un siège correspondant (17) défini dans l'élément intérieur dudit premier élément (14) et dudit second élément (15) et ouvert vers l'élément extérieur dudit premier élément (14) et second élément (15), avec des moyens élastiques pour pousser le picot (16) vers l'extérieur dudit siège (17),
une série de trous de passage (18, 19, 20, 21, 22, 23) qui sont définis sur l'élément extérieur dudit premier élément (14) ou second élément (15) et sont formés pour être traversés par une extrémité saillante (24) dudit picot (16), ladite extrémité saillante (24) dudit picot (16) faisant saillie à l'extérieur d'un desdits trous de passage (18, 19, 20, 21, 22, 23) dans une configuration de blocage mutuel entre lesdits premier et second éléments,
ledit siège (17) ayant une profondeur telle qu'elle permet le désengagement complet dudit picot (16) de chacun desdits trous de passage (18, 19, 20, 21, 22, 23), ledit picot (16) comprenant une partie coulissante (25), qui est formée afin de permettre la translation du picot dans ledit siège (17),
**caractérisée en ce que** à l'extrémité opposée (27) par rapport au pied (13), le second élément (15) a un trou de passage (28), sur le côté de la rangée de trous de passage de blocage (18, 19, 20, 21, 22, 23), pour l'insertion d'un insert d'empêchement d'extraction (29), adapté pour empêcher le premier élément (14) et le second élément (15) de se séparer mutuellement par coulissement de l'un en dehors de l'autre, ledit insert d'empêchement d'extraction (29) étant prévu pour venir en butée de limitation de course contre une paroi de butée (30) définie sur le premier élément (14).

2. Béquille réglable en longueur (10) selon la revendication 1, **caractérisée en ce que** ledit premier élément (14) est agencé à l'intérieur dudit second élément (15).

3. Béquille réglable en longueur selon une ou plusieurs des revendications précédentes, **caractérisée en ce que** ledit picot (16), qui comprend ladite extrémité saillante (24) et ladite partie coulissante (25), est constitué d'une seule pièce.

4. Béquille réglable en longueur selon une ou plusieurs des revendications précédentes, **caractérisée en ce que** ledit picot (16) est constitué d'une seule pièce faite de matière plastique ou d'un autre matériau similaire et équivalent.

5. Béquille réglable en longueur selon une ou plusieurs des revendications précédentes, **caractérisée en ce que** lesdits moyens de poussée élastiques, à l'intérieur du siège (17), sont constitués d'un ressort hélicoïdal.
